# EUROPÄISCHE PATENTSCHRIFT

(11) **EP 1 451 652 B1**
(45) Veröffentlichungstag und Bekanntmachung des Hinweises auf die Patenterteilung: **06.04.2005**
(21) Anmeldenummer: 02792611.2
(22) Anmeldetag: 22.11.2002
(51) Int. Cl.: G05B 19/409, G05B 23/02

(54) **SYSTEM UND VERFAHREN ZUR ERSTELLUNG EINER DOKUMENTATION VON ARBEITSVORGÄNGEN ZUR DARSTELLUNG IN EINEM AUGMENTED-REALITY-SYSTEM**
SYSTEM AND METHOD FOR ESTABLISHING A DOCUMENTATION OF WORKING PROCESSES FOR DISPLAY IN AN AUGMENTED REALITY SYSTEM
SYSTEME ET PROCEDE D'ETABLISSEMENT D'UNE DOCUMENTATION D'OPERATIONS EN VUE D'UNE REPRESENTATION DANS UN SYSTEME A REALITE AMPLIFIEE

(30) Priorität: 05.12.2001 DE 10159610
(43) Veröffentlichungstag der Anmeldung: 01.09.2004
(73) Patentinhaber: Siemens Aktiengesellschaft, 80333 München (DE)
(72) Erfinder: FRIEDRICH, Wolfgang, 91088 Bubenreuth (DE); MORITZ, Soeren, 91353 Wimmelbach (DE); HAMADOU, Mehdi, 91052 Erlangen (DE)
(86) Internationale Anmeldenummer: PCT/DE2002/004293
(87) Internationale Veröffentlichungsnummer: WO 2003/050626

(56) Entgegenhaltungen:
- WO-A-00/52537
- WO-A-01/24536
- WO-A-02/067067
- US-A- 6 094 625

## Beschreibung

Die Erfindung betrifft ein System und Verfahren zur Erstellung einer Dokumentation von Arbeitsvorgängen, insbesondere im Umfeld Produktion, Montage, Service oder Wartung.

Ein derartiges System und Verfahren kommt beispielsweise im Bereich der Automatisierungstechnik, bei Produktions- und Werkzeugmaschinen, in der Prozessautomatisierung, bei Diagnose-/Serviceunterstützungssystemen sowie für komplexe Komponenten, Geräte und Systeme, wie beispielsweise Fahrzeuge und industrielle Maschinen und Anlagen zum Einsatz. Eine besonders vorteilhafte Anwendung besteht im Zusammenhang mit Augmented Reality (=AR = "erweiterte Realität"), einer neuen Form der Mensch-Technik-Interaktion, bei der das Sichtfeld eines Anwenders mit rechnergenerierten virtuellen Objekten angereichert wird - beispielweise über eine Datenbrille. Die Einblendung geschieht jedoch kontextabhängig, d. h. passend und abgeleitet vom betrachteten Objekt, z. B. einem Bauteil. So wird das reale Sichtfeld beispielweise eines Monteurs durch eingeblendete Montagehinweise um für ihn wichtige Informationen erweitert. In diesem Falle kann Augmented Reality unter anderem das herkömmliche Montagehandbuch ersetzen.

Der hier vorgestellte Lösungsansatz bezieht sich auf den Einsatz von Augmented Reality in der Montage sowie im Bereich Service und Wartung.

Aus der WO 00/52537 ist ein System zur situationsgerechten Unterstützung eines Arbeiters vor Ort durch einen entfernten Experten bekannt, wobei Daten an den Experten beispielsweise in Form von Videobildern übermittelt werden und der Experte die unterstützende Information in Form von Augmented Reality Information übermittelt, die dem Arbeiter vor Ort dann zur Verfügung steht.

Aus der WO 01/24536 ist ein System zur visuellen Darstellung von Computergrafik in Kombination mit einer bildlichen Darstellung realer Objekte bekannt, bei dem Aussehen und Ausrichtung der Darstellung von Grafik und realem Objekt zueinander erhalten bleiben, auch wenn beispielsweise eine Kamera zur Aufnahme des realen Objektes in ihrer. Position verändert wird und das Objekt somit aus einem anderen Blickwinkel erfasst wird.

Der Erfindung liegt die Aufgabe zugrunde, die Erstellung einer die Methoden der Augmented Reality nutzenden Dokumentation von Arbeitsvorgängen zu erleichtern.

Diese Aufgabe wird gelöst durch ein System mit den in Anspruch 1 angegebenen Merkmalen.

Diese Aufgabe wird weiterhin gelöst durch ein Verfahren mit den in Anspruch 6 angegebenen Merkmalen.

Die Erfindung beruht auf der Erkenntnis, dass sich mit Mitteln der Augmented Reality die Erstellung einer Dokumentation von Arbeitsvorgängen wesentlich vereinfachen lässt. Professionelle Erstellungssysteme für Augmented-Reality-Systeme gibt es bisher nicht. Das erfindungsgemäße System und Verfahren vereinfacht das Engineering von Augmented-Reality-Ihhalten für Montage- und Serviceanleitungen. Dazu werden die vor Ort gewonnenen Informationen über einen oder mehrere Arbeitsvorgänge im mobilen Rechner verarbeitet und an das entfernte Rechnersystem weitergegeben. Durch die Wiedergabe der Bilddaten und der ergänzenden Informationen von den Arbeitsvorgängen vor Ort mit ersten Wiedergabemitteln des entfernten Rechnersystems erhält ein technischer Redakteur authentische Informationen über die Arbeitsvorgänge, auch wenn er selbst nicht vor Ort anwesend ist. Das erfindungsgemäße System und Verfahren unterstützt den technischen Redakteur des Weiteren bei der Augmentierung der ihm zur Verfügung gestellten Bilddaten. Dazu sind Bearbeitungsmittel zur Erstellung von die Bilddaten ergänzenden Informationen vorgesehen. Um eine variable und kontextbezogene Augmentierung zu ermöglichen, stellen die Bearbeitungsmittel ergänzende Informationen in Form von graphischen Elementen, Texten und/oder Verweisen auf weitere Informationen zur Verfügung und bieten zusätzlich die Möglichkeit, diese ergänzenden Informationen den Punkten im Raum zuzuordnen. Die die Bilddaten ergänzenden Informationen, ihre Zuordnung zu Punkten im Raum und die Trackinginformation wird als Dokumentation der Arbeitsvorgänge mit Mitteln der Augmented Reality in Speichermitteln zur späteren Verwendung gespeichert. Die zur Erstellung der Dokumentation verwendeten Bilddaten werden nach Abschluss des Erstellungsvorgangs nicht mehr benötigt und werden folglich nicht gespeichert. Dies bedeutet eine deutliche Reduzierung des zur Speicherung der Dokumentation erforderlichen Speicherplatzes im Vergleich zu bisherigen Dokumentationssystemen. Die Erfindung vermeidet die bisher z. B. bei Laborsystemen übliche umständliche Erstellung von Augmented-Reality-Szenen, welche nur mittels händischer Bearbeitung von Hilfsdateien möglich war. Im Gegensatz dazu bietet die Erfindung ein geschlossenes System und Verfahren von der Aufnahme der Bildinformationen über die Weiterverarbeitung und Weitergabe der Bildinformationen an ein entferntes Rechnersystem bis zur Bearbeitung und Erstellung einer Augmented-Reality-Dokumentation.

In einer vorteilhaften Ausgestaltung der Erfindung werden die in den Speichermitteln gespeicherten ergänzenden Informationen mittels zweiter Wiedergabemittel in das Sichtfeld eines Anwenders eingeblendet. Der Anwender erhält kontextbezogene, z. B. einem bestimmten Bauteil zugeordnete Informationen, in dem diese ergänzenden Informationen entsprechend ihrer Zuordnung zu Punkten im Raum im Sichtfeld des Anwenders angeordnet werden. So können z. B. gemischt-virtuelle Montagesituation direkt im Sichtfeld des Anwenders wiedergegeben werden, und damit in einer flexiblen Produktion, z. B. das Einrichten von Maschinen für qualifizierte Facharbeiter, wesentlich erleichtert werden. Eine facharbeiter-gerechte Fertigungsplanung und Fertigungssteuerung in der Werkstatt wird erleichtert, wenn Informationen über den jeweiligen Auftragsstatus direkt in Verbindung mit den dazugehörigen Produkten vor Ort wiedergegeben bzw. wahrgenommen werden. Das gleiche gilt auch für die Montage, wo einem Anwender, z. B. einem Monteur, bereits in der Trainingsphase einzelne Arbeitsschritte gemischt-virtuell präsentiert werden können. In diesem Zusammenhang können - z. B. durch den Vergleich realer Montageabläufe mit Simulationsergebnissen - umfassende Optimierungen erreicht werden, die sowohl die Qualität der Arbeitsplanung verbessern als auch den Montageprozess in der kritischen Anlaufphase vereinfachen und beschleunigen.

In einer weiteren vorteilhaften Ausgestaltung der Erfindung weist das entfernte Rechnersystem eine Symbolbibliothek zur Bereitstellung der graphischen Elemente und eine Dokumentenbibliothek zur Bereitstellung der Texte auf. Damit wird die einfache, schnelle und standardisierte Erstellung einer Dokumentation der Arbeitsvorgänge unterstützt. Die Symbolbibliothek enthält beispielsweise graphische Elemente wie Pfeile, Kreise etc., mit denen Schrauben, Halterungen oder notwendige Handgriffe markiert werden können. Die Dokumentenbibliothek setzt sich beispielsweise aus elementaren Grundelementen zusammen, welche Textelemente umfassen, die Montage-/Demontageschritte beschreiben.

Ein technischer Redakteur, welcher die Bearbeitungsmittel des entfernten Rechnersystems nutzt, kann weitere Informationen von den Arbeitsvorgängen vor Ort erhalten, wenn entsprechend einer weiteren Ausgestaltung der Erfindung Aufnahmemittel zur Aufnahme von akustischen Informationen über die Arbeitsvorgänge vorgesehen sind. Dabei wird der mobile Rechner zur Verarbeitung der aufgenommenen akustischen Informationen und zur Weitergabe der akustischen Informationen als Audiodaten an das entfernte Rechnersystem vorgesehen und werden die ersten Wiedergabemittel des entfernten Rechnersystems zur Wiedergabe der Audiodaten vorgesehen. Ein Arbeitsvorgang kann so z. B. durch den Monteur mit sprachlichen Informationen beschrieben werden, welche dem technischen Redakteur am entfernten Rechnersystem zur Verfügung gestellt werden.

In einer weiteren vorteilhaften Ausgestaltung der Erfindung sind die Bearbeitungsmittel zur Zuordnung der ergänzenden Informationen zu Arbeitsschritten innerhalb eines Workflows und Steuerungsmittel zur Steuerung der zweiten Wiedergabemittel durch den Anwender vorgesehen. Durch diese Einbettung der augmentierten und dokumentierten Arbeitsvorgänge in einen Workflow werden diese für Serviceeinsätze abrufbar. Den Workflow erstellt der technische Redakteur mit Hilfe der Bearbeitungsmittel. Spezielle verbale Kommentare des Monteurs vor Ort können in diesen Workflow als Erfahrungsannotation eingebettet werden. Ein Monteur kann die solchermaßen erstellte Dokumentation eines Arbeitsvorgangs nutzen, indem er jeweils die Teile der Augmented-Reality-Dokumentation abruft, welche ihn interessierende Arbeitsschritte beschreiben. Zudem wird durch eine Zuordnung der ergänzenden Informationen zu Arbeitsschritten innerhalb eines Workflows der zu speichernde Umfang der Dokumentation entscheidend reduziert. Nur die wirklich wichtigen Arbeitsschritte eines Arbeitsvorgangs werden dokumentiert und innerhalb des Workflows strukturiert abgelegt.

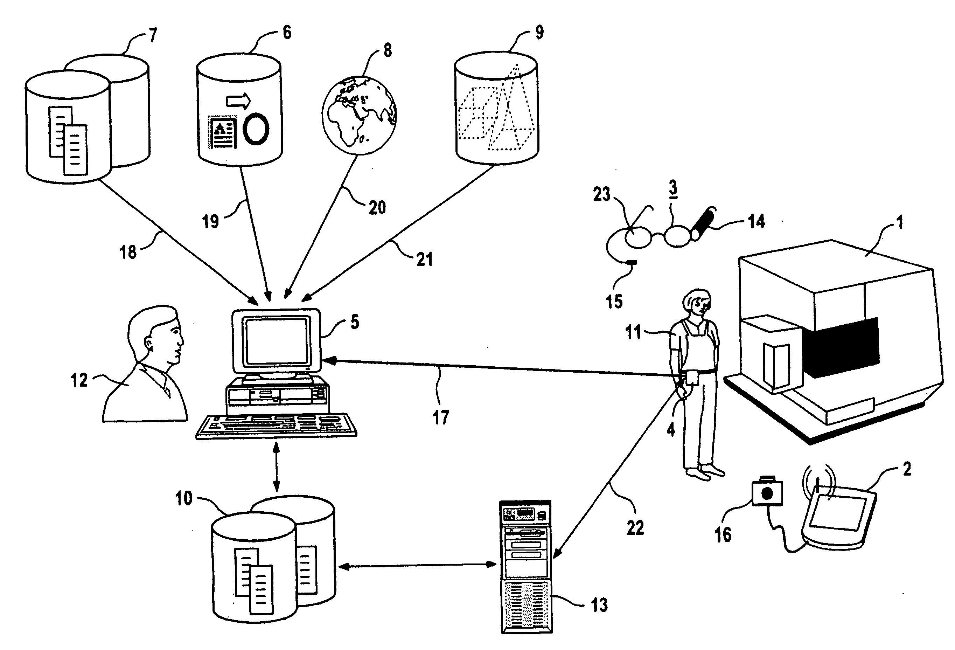

Nachfolgend wird die Erfindung anhand des in der Figur dargestellten Ausführungsbeispiels näher beschrieben und erläutert.

Die Figur zeigt ein Ausführungsbeispiel eines Systems zur Erstellung einer Dokumentation von Arbeitsvorgängen. Die Figur zeigt eine Anlage oder Maschine 1, an welcher ein Anwender, im Ausführungsbeispiel ein Monteur 11, ein oder mehrere Arbeitsvorgänge verrichtet. Der Monteur 11 trägt ein Headset 3, welches in der Figur separat vergrößert dargestellt ist. Das Headset 3 des Monteurs 11 weist eine Datenbrille 23, ein Mikrofon 15 und eine erste Kamera 14 auf. Die Komponenten 14, 15, 23 des Headset 3 sind drahtlos oder drahtgebunden mit einem mobilen Rechner 4 verbunden, welchen der Monteur 11 mit sich führt. Der mobile Rechner 4 weist eine Verbindung 17 zu einem entfernten Rechnersystem 5 auf. Dieses Rechnersystem 5 ist über weitere Verbindungen 18, 19, 20 und 21 mit einer Dokumentenbibliothek 7, einer Symbolbibliothek 6, dem World Wide Web 8 und/oder einem CAD-Produktmodell 9 verbunden. Das Rechnersystem 5 wird bedient durch einen technischen Redakteur 12 und steht in Verbindung zur Dokumentation 10, welche auf einem Server 13 abgelegt ist. Dieser Server 13 hat eine weitere Verbindung 22 zum mobilen Rechner 4 des Monteurs 11. Die Figur zeigt außerdem ein Webpad 2, welches mit einer zweiten Kamera 16 verbunden ist.

Im in der Figur dargestellten Ausführungsbeispiel demontiert ein Anwender - in diesem Fall ein Monteur 11 - eine durch eine Störung markierte Komponente der Maschine 1. Der vom Monteur 11 durchgeführte Arbeitsvorgang, in diesem Fall also ein Demontagevorgang, wird mit einer ersten Kamera 14 an einem Headset 3 des Monteurs 11 aufgenommen. Das Headset 3 enthält im Bereich von Brillengläsern einer Datenbrille angeordnete Anzeigevorrichtungen, die an der Datenbrille angeordnete Kamera 14 und ein zur Erfassung von Sprachkommandos an der Datenbrille angeordnetes Mikrofon 15. Die von der ersten Kamera 14 aufgenommenen Bildinformationen werden im mobilen Rechner 4 des Monteurs 11 weiterverarbeitet und als Bilddaten über die Verbindung 17 an das entfernte Rechnersystem 5 eines technischen Redakteurs 12 weitergegeben. Mit Trackingmitteln wird die Position und die Ausrichtung der Kamera 14 relativ zu Punkten im Raum, z. B. zu einer bestimmten Komponente der Maschine 1 oder zu an der Maschine 1 angebrachten Markern bestimmt. Die so ermittelte Position und Ausrichtung der Kamera wird ebenfalls vom mobilen Rechner 4 verarbeitet und über die Kommunikationsverbindung 17 als Trackinginformation an das Rechnersystem 5 weitergegeben. Die Bilddaten werden im Beispiel als Videostream, z. B. im Format bzw. in der Technologie MPEG4, synchron mit der Trackinginformation über die Kommunikationsverbindung 17 übertragen. Optional können über die Kommunikationsverbindung 17 auch mit Aufnahmemitteln, z. B. dem Mikrofon 15 am Headset 3 des Monteurs 11, aufgenommene gesprochene Kommentare zusammen mit dem Videostream übertragen werden. Die gesprochenen Kommentare ermöglichen dem technischen Redakteur 12 ein besseres Verständnis von komplexen Handlungen innerhalb des Arbeitsvorgangs. Das Rechnersystem 5 enthält erste Wiedergabemittel zur Wiedergabe der Bilddaten. Im Ausführungsbeispiel sind diese ersten Wiedergabemittel als Monitor ausgebildet, auf welchem dem technischen Redakteur 12 die mit der ersten Kamera 14 aufgenommenen Bildinformationen von der Maschine 1 dargestellt werden. Das Rechnersystem 5 stellt dem technischen Redakteur 12 Bearbeitungsmittel zur Erstellung von die Bilddaten ergänzenden Informationen zur Verfügung. Mit Hilfe dieser Bearbeitungsmittel ergänzt der technische Redakteur die Bilddaten um graphische Elemente, Texte und/oder Verweise auf weitere Informationen. Gleichzeitig wird durch die Bearbeitungsmittel eine Zuordnung dieser ergänzenden Informationen zu Punkten im Raum möglich. Im Beispiel entnimmt der technische Redakteur 12 aus einer Symbolbibliothek 6 graphische Elemente wie Pfeile, Kreise etc., um damit Schrauben, Halterungen etc. der Maschine 1 zu markieren. Aus einer aus elementaren Grundelementen aufgebauten Dokumentenbibliothek 7 entnimmt er Textelemente, die Montage/Demontageschritte beschreiben und hängt diese an bereits angebrachte Markierungen. Information über weitere in der Maschinendokumentation nicht enthaltene Bauteile ruft der technische Redakteur 12 über das World Wide Web 8, z. B. auf Produktportalen eines Bauteilelieferanten, ab und augmentiert mit diesen Informationen in gleicher Weise den Montage/Demontagevorgang des Monteurs 11. Der Monteur 11 kann, wenn er das wünscht, die ergänzenden Informationen gleich synchron zur Erstellung durch den technischen Redakteur 12 mittels zweiter Wiedergabemittel, z. B. der Datenbrille 23 seines Headsets 3, anzeigen lassen. So kann er zeitnah dem technischen Redakteur 12 Rückmeldung im Sinne einer Qualitätssicherung geben. Die durch den technischen Redakteur 12 mit Hilfe der Bearbeitungsmittel erstellten ergänzenden Informationen werden als Dokumentation 10 der Arbeitsvorgänge des Monteurs 11 auf Speichermitteln, im Ausführungsbeispiel einem Server 13, abgelegt, wo sie für spätere ähnliche Tätigkeiten als Unterstützung abgerufen werden können. Andere Servicetechniker oder Monteure können somit von der Erfahrung und dem Know-how des ersten Monteurs 11 und des technischen Redakteurs 12 profitieren, da die Anleitungsschritte und die passende Dokumentation stets in ihrem Sichtfeld passend zu der realen Welt angezeigt werden. Die auf dem Server 13 gespeicherten ergänzenden Informationen sind dabei den realen Objekten der Maschine 1 zugeordnet. Sie werden entsprechend ihrer Zuordnung innerhalb des Sichtfelds des Monteurs 11 korrekt eingeblendet. Die Position der ergänzenden Informationen wird relativ zu Markern - bei markerbasiertem Tracking - oder zu Merkmalen wie Kanten, Kreisen, Segmenten, Schriftzügen etc. - bei markerlosem Tracking - mit der Augmentierung gespeichert. Im Ausführungsbeispiel wird die augmentierte Szene, d. h. der mit ergänzenden Informationen versehene Arbeitsvorgang, in einen Workflow eingebettet und damit für weitere Serviceeinsätze abrufbar. Den Workflow erstellt der technische Redakteur 12, spezielle verbale Kommentare des Monteurs 11 kann der technische Redakteur 12 in den Workflow als Erfahrungsannotation einbetten. Die Kommunikationsverbindung 17 zwischen dem mobilen Rechner 4 des Monteurs 11 und dem Rechnersystem 5 des technischen Redakteurs 12, z. B. einem PC (=Personal Computer), dient zur Übertragung der Bilddaten und der Positionsinformationen der Kamera bei nicht videobasiertem Tracking-Verfahren. Die Kommunikationsverbindung 17 kann z. B. als Funkverbindung ausgebildet sein oder auch als Mischung aus Funkverbindung und Gateway. Hier können beliebige Übertragungsmechanismen der Informationstechnologie zum Einsatz kommen. Für die Art der Anwendung bietet sich aber eine drahtlose Verbindung mit oder ohne Gateway zum Rechnersystem 5 des technischen Redakteurs 12 an. Die auszutauschende Information kann auch erst lokal auf dem mobilen Rechner 4 des Monteurs 11 bzw. auf dem ggf. vorhandenen Gateway gespeichert werden und erst zu einem späteren Zeitpunkt in das Redaktionssystem, d. h. dem Rechnersystem 5 des technischen Redakteurs 12, eingespielt werden. Kommt ein nicht videobasiertes Tracking-Verfahren zum Einsatz, so sind neben den Bilddaten in Form eines Videostreams auch aktuelle Informationen vom Tracking-System synchronisiert zu übertragen (Position, Orientierung und Sichtfeld des Anwenders bzw. der Kamera). Diese Information wird benötigt, um entweder die relativen Koordinaten bezüglich des aktuell erkannten Markers/Objekts oder die entsprechenden Weltkoordinaten zu ermitteln. Als Weltkoordinaten werden dabei die Koordinaten im Raum bezüglich eines zuvor festgelegten Punktes im Raum verstanden. Das System ist auf Seiten des technischen Redakteurs 12 mit einer Aufzeichnungs-/Abspieleinheit (Videorecorderfunktionalität) als erste Wiedergabemittel für den Videostream und ggf. für die synchronisiert abgelegten Tracking-Informationen ausgestattet. Die Aufzeichnungs-/Abspieleinheit ist vorzusehen, da der technische Redakteur 12 in den meisten Fällen die Annotation nicht in Echtzeit hinzufügen kann. In ähnlicher Weise kann der Montage- bzw. Demontagevorgang auch über ein Webpad 2 mit eingebauter oder separater Kamera 16 aufgenommen werden und entweder am Webpad 2 oder über das Rechnersystem 5 des technischen Redakteurs 12 augmentiert werden.

In einem weiteren Ausführungsbeispiel, welches ebenfalls in der Figur angedeutet ist, kann die Erstellung einer Dokumentation von Arbeitsvorgängen auch vom technischen Redakteur 12 anhand des szenarischen Ablaufs einer 3D-Konstruktionszeichnung eines CAD-Produktmodells 9 erfolgen. Dabei führt der technische Redakteur 12 den Arbeitsvorgang, d. h. die Montage bzw. Demontage, mit Hilfe der 3D-Elemente aus der 3D-Konstruktionszeichnung durch und augmentiert diese 3D-Elemente um die notwendige Information wie Pfeile, Kreise, Text, Detailexplosionszeichnungen, benötigte Werkzeuge, Sicherungsmaßnahmen etc. Die relative Position der augmentierten Information wird dabei aus dem vermaßten 3D-Modell entnommen, mit der augmentierten Information gespeichert und zur Augmentierung im Service-/Wartungsfall abgerufen. Zum Zeitpunkt der Erstellung dieser Dokumentation des Arbeitsvorgangs muss bereits bekannt sein, ob die Positionsangaben relativ zu einer Markerposition beschrieben werden müssen. Alternativ und besser ist eine Marker-neutrale Beschreibung, also die Verwendung von Weltkoordinaten und die Initialisierung des Tracking-Systems und der Marker entsprechend des Weltkoordinatensystems. Zur weiteren Unterstützung der Erstellung einer Dokumentation von Arbeitsvorgängen können weitere Informationen vom Monteur 11 über die Kommunikationsverbindung 17 an den technischen Redakteur 12 weitergegeben werden. Solche weitere Informationen sind insbesondere kontextbezogene Sprachinformationen des Monteurs 11. Der Kontextbezug ergibt sich dabei aus der Verknüpfung mit Orts-, Komponenten-, Workflow-Informationen oder ggf. Marker-Informationen. Der Kontextbezug wird zur späteren kontextbezogenen Identifizierung mitübertragen und abgespeichert.

Im Folgenden wird das Verhältnis der Erfindung zum technologischen Umfeld dargestellt. Im Service genügen herkömmliche Technologien kaum mehr, um komplexe Diagnose- und Behebungsprozeduren zu unterstützen und zu dokumentieren. Da diese Prozesse in vielen Bereichen aber ohnehin auf Basis von digitalen Daten geplant werden, bieten Augmented-Reality-Technologien die Möglichkeit, die Informationsquellen für die Wartung zu übernehmen und einem Monteur 11, z. B. über eine Datenbrille 23, durch Überlagerung mit realen Objekten einen Ausbauvorgang zu erläutern. In Bezug auf kooperative Arbeit ermöglicht die Aufnahme von Bildinformationen des Arbeitsvorgangs eine verteilte Problemlösung, indem ein entfernter Experte mit dem Monteur 11 vor Ort über globale Distanzen hinweg kommuniziert. Dieser Fall ist insbesondere für die überwiegend mittelständischen Werkzeugmaschinenhersteller relevant. Diese sind durch die Globalisierung gezwungen, Produktionsstätten ihrer Kunden weltweit zu errichten. Jedoch ist eine Präsenz von Niederlassungen in allen wichtigen Märkten weder aus wirtschaftlichen Gründen realisierbar, noch kann auf das profunde Wissen erfahrener Service-Mitarbeiter des Stammhauses bezüglich der zunehmend komplexer werdenden Anlagen verzichtet werden. Die Besonderheit in der Mensch-Technik-Interaktion bei Augmented Reality liegt in einer sehr einfachen und intuitiven Kommunikation mit dem Rechner, beispielsweise ergänzt durch multimodale Interaktionstechniken wie Sprachverarbeitung oder Gestikerkennung. Die Verwendung von tragbaren Rechnereinheiten ermöglicht darüber hinaus völlig neue mobile Nutzungsszenarien, wobei die spezifischen Daten jederzeit über ein drahtloses Netz angefordert werden können. Neue Visualisierungstechniken erlauben eine direkte Annotation, z. B. von Prozess-, Mess- oder Simulationsdaten, an das reale Objekt oder in die reale Umgebung. In Verbindung mit verteilten Anwendungen sind mehrere Benutzer in der Lage, in einer realen Umgebung mit Hilfe einer gemeinsamen Datenbasis zu arbeiten (shared augmented environments) oder in verschiedenen Umgebungen Augmented-Reality-gestützt zu kooperieren.

Zusammenfassend betrifft die Erfindung somit ein System und ein Verfahren, welches die Erstellung einer die Methoden der Augmented Reality nutzenden Dokumentation von Arbeitsvorgängen erleichtert, insbesondere im Umfeld Produktion, Montage, Service oder Wartung. Das System enthält mindestens eine Kamera 14, 16 zur Aufnahme von Bildinformationen über einen oder mehrere Arbeitsvorgänge, Trackingmittel zur Bestimmung von Position und Ausrichtung der Kamera 14, 16 relativ zu Punkten im Raum und einen mobilen Rechner 4 zur Verarbeitung der von der Kamera 14, 16 aufgenommenen Bildinformationen und der Position und Ausrichtung der Kamera 14, 16 und zur Weitergabe der verarbeiteten Bildinformationen als Bilddaten und der Position und Ausrichtung der Kamera 14, 16 als Trackinginformation an ein entferntes Rechnersystem 5, wobei das entfernte Rechnersystem 5 aufweist: Bearbeitungsmittel zur Erstellung von die Bilddaten ergänzenden Informationen in Form von grafischen Elementen, Texten und/oder Verweisen auf weitere Informationen und zur Zuordnung der ergänzenden Informationen zu Punkten im Raum, erste Wiedergabemittel zur Wiedergabe der Bilddaten und der ergänzenden Informationen und Speichermittel zur Speicherung der die Bilddaten ergänzenden Informationen, ihrer Zuordnung zu Punkten im Raum und der Trackinginformation als Dokumentation 10 der Arbeitsvorgänge.

## Patentansprüche

1. System zur Erstellung einer Dokumentation von Arbeitsvorgängen in Form von Arbeitsschritten für einen Servicetechniker und/oder Monteur
• mit mindestens einer Kamera (14, 16) zur Aufnahme von Bildinformationen über einen oder mehrere'Arbeitsvorgänge,
• mit Trackingmitteln zur Bestimmung von Position und Ausrichtung der Kamera (14, 16) relativ zu Punkten im Raum und
• mit einem mobilen Rechner (4) zur Verarbeitung der von der Kamera (14, 16) aufgenommenen Bildinformationen und der Position und Ausrichtung der Kamera (14, 16) und zur Weitergabe der verarbeiteten Bildinformationen als Bilddaten und der Position und Ausrichtung der Kamera (14, 16) als Trackinginformation an ein entferntes Rechnersystem (5),
wobei das entfernte Rechnersystem (5) aufweist:
• erste Wiedergabemittel zur Wiedergabe der Bilddaten,
• Bearbeitungsmittel zur manuellen Erstellung von die Bilddaten ergänzenden Informationen in Form von grafischen Elementen, Texten und/oder Verweisen auf weitere Informationen und zur Zuordnung der ergänzenden Informationen zu den Punkten im Raum, wobei die ergänzenden Informationen realen Objekten zugeordnet sind,
• und zur Erstellung der Dokumentation Speichermittel zur Speicherung der die Bilddaten ergänzenden Informationen, ihrer Zuordnung zu Punkten im Raum und der Trackinginformation als Dokumentation (10) der Arbeitsvorgänge.

2. System nach Anspruch 1,
**dadurch gekennzeichnet,**
**dass** zweite Wiedergabemittel zur Wiedergabe der ergänzenden Informationen innerhalb eines Sichtfelds eines Anwenders vorgesehen sind, wobei die ergänzenden Informationen entsprechend ihrer Zuordnung zu Punkten im Raum im Sichtfeld des Anwenders angeordnet sind.

3. System nach Anspruch 1 oder 2,
**dadurch gekennzeichnet,**
**dass** das entfernte Rechnersystem (5) eine Symbolbibliothek (6) zur Bereitstellung der grafischen Elemente und eine Dokumentenbibliothek (7) zur Bereitstellung der Texte aufweist.

4. System nach einem der vorhergehenden Ansprüche,
**dadurch gekennzeichnet,**
**dass** Aufnahmemittel zur Aufnahme von akustischen Informationen über die Arbeitsvorgänge vorgesehen sind, wobei der mobile Rechner (4) zur Verarbeitung der aufgenommenen akustischen Informationen und zur Weitergabe der verarbeiteten akustischen Informationen als Audiodaten an das entfernte Rechnersystem (5) vorgesehen ist und die ersten Wiedergabemittel des entfernten Rechnersystems (5) zur Wiedergabe der Audiodaten vorgesehen sind.

5. System nach einem der Ansprüche 2 bis 4,
**dadurch gekennzeichnet,**
**dass** die Bearbeitungsmittel zur Zuordnung der ergänzenden Informationen zu Arbeitsschritten innerhalb eines Workflows und Steuermittel zur Steuerung der zweiten Wiedergabemittel durch den Anwender vorgesehen sind.

6. Verfahren zur Erstellung einer Dokumentation von Arbeitsvorgängen in Form'von Arbeitsschritten für einen Servicetechniker und/oder Monteur mit folgenden Verfahrensschritten:
• Bildinformationen über einen oder mehrere Arbeitsvorgänge werden mit mindestens einer Kamera (14, 26) aufgenommen,
• Position und Ausrichtung der Kamera (14, 16) werden relativ zu Punkten im Raum mit Trackingmitteln bestimmt,
• mit einem mobilen Rechner (4) werden die von der Kamera (14, 16) aufgenommenen Bildinformationen und die Position und Ausrichtung der Kamera (14, 16) verarbeitet und die verarbeiteten Bildinformationen werden als Bilddaten, die Position und Ausrichtung der Kamera (14, 16) werden als Trackinginformation an ein entferntes Rechnersystem (5) weitergegeben,
• auf dem entfernten Rechnersystem (5) werden die Bilddaten mit ersten Wiedergabemitteln wiedergegeben,
• die die Bilddaten ergänzende Informationen werden in Form von grafischen Elementen, Texten und/oder Verweisen auf weitere Informationen manuell erstellt und die ergänzenden Informationen werden zu Punkten im Raum und den realen Objekten zugeordnet,
• und zur Erstellung der Dokumentation werden die die Bilddaten ergänzenden Informationen, ihre Zuordnung zu den Punkten im Raum und die Trackinginformation als Dokumentation (10) der Arbeitsvorgänge gespeichert.

7. Verfahren nach Anspruch 6,
**dadurch gekennzeichnet,**
**dass** die ergänzenden Informationen innerhalb eines Sichtfelds eines Anwenders mit zweiten Wiedergabemitteln wiedergegeben werden, wobei die ergänzenden Informationen entsprechend ihrer Zuordnung zu Punkten im Raum im Sichtfeld des Anwenders angeordnet werden.

8. Verfahren nach Anspruch 6 oder 7,
**dadurch gekennzeichnet,**
**dass** im entfernten Rechnersystem (5) die grafischen Elemente in einer Symbolbibliothek (6), die Texte in einer Dokumentenbibliothek (7) bereitgestellt werden.

9. Verfahren nach einem der Ansprüche 6 bis 8,
**dadurch gekennzeichnet,**
**dass** akustische Informationen über die Arbeitsvorgänge mit Aufnahmemitteln aufgenommen werden, wobei der mobile Rechner (4) die aufgenommenen akustischen Informationen verarbeitet und die verarbeiteten akustischen Informationen als Audiodaten an das entfernte Rechnersystem (5) weitergibt und die Audiodaten mit ersten Wiedergabemitteln des entfernten Rechnersystems (5) wiedergegeben werden.

10. Verfahren nach einem der Ansprüche 7 bis 9,
**dadurch gekennzeichnet,**
**dass** die ergänzenden Informationen durch die Bearbeitungsmittel zu Arbeitsschritten innerhalb eines Workflows zugeordnet werden und die zweiten Wiedergabemittel durch den Anwender mit Steuermitteln steuerbar sind.

## Claims

1. System for the production of documentation for work processes in the form of work steps for a service technician or fitter
• with at least one camera (14, 16) for recording items of image information about one or more work processes,
• with tracking facilities for determining the position and orientation of the camera (14, 16) relative to points in space and
• with a mobile computer (4) for processing the items of image information recorded by the camera (14, 16) and the position and orientation of the camera (14, 16), and for passing on the processed items of image information as image data, together with the position and orientation of the camera (14, 16) as tracking data, to a remote computer system (5),
whereby the remote computer system (5) has:
• first reproduction means for reproducing the image data
• processing means for manually producing items of information to supplement the image data in the form of graphical elements, items of text and/or references to other items of information, and for assigning the items of supplementary information to points in space, whereby the supplementary items of information are assigned to real objects,
• and, for producing the documentation, storage means for storing the items of information which supplement the image data, their assignment to points in space, and the tracking data, as documentation (10) for the work processes.

2. System in accordance with Claim 1,
**characterized in that**
a second reproduction means is used for reproducing the supplementary items of information within the visual field of a user, whereby these supplementary items of information are arranged in the user's visual field according to their assignments to points in space.

3. System in accordance with Claim 1 or 2,
**characterized in that**
the remote computer system (5) has a symbol library (6) for providing the graphical elements and a document library (7) for providing the text items.

4. System in accordance with one of the preceding claims,
**characterized in that**
recording means are used for recording auditory information about the work processes, whereby a mobile computer (4) is used for processing the auditory information which is recorded and for passing on the auditory information to the remote computer system (5) as audio data, and the first reproduction means of the remote computer system (5) are used for reproducing the audio data.

5. System in accordance with one of the Claims 2 to 4,
**characterized in that**
the processing means are used for assigning the items of supplementary information to work steps within a workflow and control facilities are used for controlling the second reproduction facilities by the user.

6. Method for producing documentation for work processes in the form of work steps for a service technician and/or fitter, using the following method steps:
• items of image information are recorded about one or more work processes using at least one camera (14, 16),
• the position and orientation of the camera (14, 16) are determined relative to points in space using tracking means, and
• a mobile computer (4) is used to process the items of image information recorded by the camera (14, 16) and the position and orientation of the camera (14, 16), and to pass on the processed items of image information as image data, together with the position and orientation of the camera (14, 16) as tracking data, to a remote computer system (5),
• on the remote computer system (5), the image data is reproduced using the first reproduction means,
• the items of information to supplement the image data are produced manually, in the form of graphical elements, items of text and/or references to other items of information, and the items of supplementary information are assigned to points in space and to the real objects,
• and, to produce the documentation, the items of information which supplement the image data, their assignment to points in space, and the tracking data, are stored as documentation (10) for the work processes.

7. Method in accordance with Claim 6,
**characterized in that**
using the second reproduction means the items of supplementary information are reproduced within the visual field of a user, whereby these supplementary items of information are arranged in the user's visual field according to their assignments to points in space.

8. Method in accordance with Claim 6 or 7,
**characterized in that**
in the remote computer system (5), the graphical elements are provided in a symbol library (6) and the text items in a document library (7).

9. Method in accordance with one of the Claims 6 to 8,
**characterized in that**
auditory information about the work processes is recorded using recording means, whereby a mobile computer (4) processes the auditory information which is recorded and passes on the processed auditory information to the remote computer system (5) as audio data, and the audio data is reproduced using the first reproduction means of the remote computer system (5).

10. Method in accordance with one of Claims 7 to 9,
**characterized in that**
the items of supplementary information are assigned to work steps within a workflow by the processing means and the second reproduction means can be controlled by the user using control means.

## Revendications

1. Système pour l'élaboration d'une documentation d'opérations sous la forme d'étapes de travail pour un technicien et/ou un monteur,
• avec au moins une caméra (14, 16) pour l'enregistrement d'informations vidéo concernant une ou plusieurs opérations,
• avec des moyens de poursuite pour la détermination de la position et de l'orientation de la caméra (14, 16) par rapport à des points dans l'espace, et
• avec un ordinateur portable (4) pour le traitement des informations vidéo enregistrées par la caméra (14, 16) et de la position ainsi que de l'orientation de la caméra (14, 16) et pour le transfert des informations vidéo traitées comme données d'image et de la position ainsi que de l'orientation de la caméra (14, 16) comme information de poursuite vers un système informatique distant (5),
le système informatique distant (5) comportant :
• des premiers moyens de reproduction pour la reproduction des données vidéo,
• des moyens de traitement pour l'élaboration manuelle d'informations complétant les données vidéo sous la forme d'éléments graphiques, de textes et/ou de renvois à d'autres informations et pour l'association des informations complémentaires à des points dans l'espace, les informations complémentaires étant associées à des objets réels,
• et, pour l'élaboration de la documentation, des moyens de mémorisation pour la mémorisation des informations complétant les données vidéo, de leur association à des points dans l'espace et de l'information de poursuite comme documentation (10) des opérations.

2. Système selon la revendication 1,
**caractérisé par le fait que** des deuxièmes moyens de reproduction sont prévus pour la reproduction des informations complémentaires à l'intérieur d'un champ de vision d'un utilisateur, les informations complémentaires étant disposées dans le champ de vision de l'utilisateur selon leur association à des points dans l'espace.

3. Système selon la revendication 1 ou 2,
**caractérisé par le fait que** le système informatique distant (5) comporte une bibliothèque de symboles (6) pour la mise à disposition des éléments graphiques et une bibliothèque de documents (7) pour la mise à disposition des textes.

4. Système selon l'une des revendications précédentes,
**caractérisé par le fait que** des moyens d'enregistrement sont prévus pour l'enregistrement d'informations acoustiques concernant les opérations, l'ordinateur portable (4) étant prévu pour le traitement des informations acoustiques enregistrées et pour le transfert des informations acoustiques traitées comme données audio vers le système informatique distant (5) et les premiers moyens de reproduction du système informatique distant (5) étant prévus pour la reproduction des données audio.

5. Système selon l'une des revendications 2 à 4,
**caractérisé par le fait que** les moyens de traitement sont prévus pour l'association des informations complémentaires à des étapes de travail à l'intérieur d'une gestion de processus workflow et que des moyens de commande sont prévus pour la commande des deuxièmes moyens de reproduction par l'utilisateur.

6. Procédé pour l'élaboration d'une documentation d'opérations sous la forme d'étapes de travail pour un technicien et/ou un monteur avec les étapes de procédé suivantes :
• on enregistre des informations vidéo concernant une ou plusieurs opérations avec au moins une caméra (14, 16),
• on détermine la position ainsi que l'orientation de la caméra (14, 16) par rapport à des points dans l'espace avec des moyens de poursuite,
• avec un ordinateur portable (4), on traite les informations vidéo enregistrées par la caméra (14, 16) et la position ainsi que l'orientation de la caméra (14, 16) et on transfère vers un système informatique distant (5) les informations vidéo traitées comme données vidéo et la position ainsi que l'orientation de la caméra (14, 16) comme information de poursuite,
• sur le système informatique distant (5), on reproduit les données vidéo avec des premiers moyens de reproduction,
• on élabore manuellement les informations complétant les données vidéo sous la forme d'éléments graphiques, de textes et/ou de renvois à d'autres informations et on associe les informations complémentaires à des points dans l'espace et à des objets réels,
• et, pour l'élaboration de la documentation, on mémorise comme documentation (10) des opérations les informations complétant les données vidéo, leur association aux points dans l'espace et l'information de poursuite.

7. Procédé selon la revendication 6,
**caractérisé par le fait qu'**on reproduit les informations complémentaires avec des deuxièmes moyens de reproduction à l'intérieur d'un champ de vision d'un utilisateur, les informations complémentaires étant disposées dans le champ de vision de l'utilisateur selon leur association à des points dans l'espace.

8. Procédé selon la revendication 6 ou 7,
**caractérisé par le fait que**, dans le système informatique distant (5), on met à disposition les éléments graphiques dans une bibliothèque de symboles (6) et les textes dans une bibliothèque de documents (7).

9. Procédé selon l'une des revendications 6 à 8,
**caractérisé par le fait qu'**on enregistre des informations acoustiques concernant les opérations par des moyens d'enregistrement, l'ordinateur portable (4) traitant les informations acoustiques enregistrées et transférant les informations acoustiques traitées comme données audio vers le système informatique distant (5) et les données audio étant reproduites avec des premiers moyens de reproduction du système informatique distant (5).

10. Procédé selon l'une des revendications 7 à 9,
**caractérisé par le fait que** les informations complémentaires sont associées par les moyens de traitement à des étapes de travail à l'intérieur d'une gestion de processus workflow et que les deuxièmes moyens de reproduction peuvent être commandés par l'utilisateur avec des moyens de commande.
